**Europäisches Patentamt**

**European Patent Office**

**Office européen des brevets**

(19)

(11) Numéro de publication : **0 412 918 B1**

(12) # FASCICULE DE BREVET EUROPEEN

(45) Date de publication du fascicule du brevet :
**09.12.92 Bulletin 92/50**

(51) Int. Cl.⁵ : **A01K 89/01**

(21) Numéro de dépôt : **90420366.8**

(22) Date de dépôt : **02.08.90**

(54) **Moulinet de pêche à bobine debrayable.**

(30) Priorité : **09.08.89 FR 8910993**

(43) Date de publication de la demande :
**13.02.91 Bulletin 91/07**

(45) Mention de la délivrance du brevet :
**09.12.92 Bulletin 92/50**

(84) Etats contractants désignés :
**DE FR GB IT**

(56) Documents cités :
**DE-U- 8 631 555**
**US-A- 4 249 706**

(73) Titulaire : **MITCHELL SPORTS**
**30, rue de Messy**
**F-74300 Cluses (FR)**

(72) Inventeur : **Bernard, Jean**
**134 avenue des Lacs**
**F-74300 Scionzier (FR)**
Inventeur : **Zanon, Joseph**
**Le Pré du Crêt**
**F-74130 Marignier (FR)**

(74) Mandataire : **de Beaumont, Michel**
**Cabinet Poncet 7, chemin de Tillier B.P. 317**
**F-74008 Annecy RP Cédex (FR)**

Jouve, 18, rue Saint-Denis, 75001 PARIS

## Description

La présente invention concerne les moulinets pour canne à pêche, du type à bobine fixe et récupérateur de fil. L'invention s'applique plus spécialement à de tel moulinet dont la réserve de fil, appelée "bobine" ou "tambour", est une pièce sensiblement de révolution constituée de deux flasques étendus radialement et réunis par un moyeu cylindrique s'étendant axialement d'un flasque à l'autre, cette bobine étant adaptée de manière amovible à l'extrémité antérieure d'un arbre support de bobine monté lui-même rotatif dans le boîtier de moulinet et sollicité par un frein arrière.

Tous les moulinets actuels de ce type comportent un dispositif permettant de rendre amovible la bobine par rapport à son arbre support. Par exemple, le document US-A-2 865 662 décrit un tel moulinet à bobine démontable dans lequel l'extrémité antérieure de l'arbre support comporte une gorge périphérique dans laquelle s'engage une clavette élastique solidaire de la bobine. Un poussoir axial accessible sur la face antérieure de la bobine comporte une extrémité interne conique qui, lors de son enfoncement, s'engage entre les branches de la clavette et provoque son écartement et sa sortie hors de la gorge périphérique de l'arbre support.

Un tel dispositif est bien adapté à différents types de pêches, notamment la pêche au lancé. Lors de la récupération du fil, le récupérateur de fil enroule le fil sur la bobine. On peut limiter la tension du fil et la régler par un réglage du frein arrière qui commande le couple résistant entre l'arbre support de bobine et le boîtier de moulinet : lorsque le fil est tiré selon une tension supérieure à une valeur déterminée, le frein arrière autorise la rotation de l'arbre support de bobine et de la bobine en opposant une résistance en fonction du serrage du frein.

Il apparait cependant qu'un tel dispositif n'est pas particulièrement bien adapté pour la pêche au posé. Dans ce type de pêche, on pose la canne sur un support, et si on laisse le récupérateur de fil en position de récupération, on doit désaccoupler l'arbre support de bobine par rapport au boîtier pour autoriser le dévidement libre de fil lorsque le poisson a mordu. Dans ces conditions, on règle le couple de freinage du frein arrière à son minimum, pour que le maintien du fil soit juste suffisant pour résister au courant de la rivière ou au vent, mais il est peu commode et peu rapide de régler à nouveau le couple de freinage avant le ferrage, car cela nécessite une manoeuvre longue et contraignante du frein arrière, de sorte que les pêcheurs renoncent à utiliser cette méthode.

Si l'on ouvre le récupérateur de fil, la résistance est alors insuffisante et le fil se dévide de la bobine sous l'action du courant d'eau ou du vent.

Avec les équipements actuels, les pêcheurs en sont réduits à coincer le fil, par exemple sous un caillou, de façon à produire une force de retenue limitée et provisoire qui disparait lorsque le poisson a mordu. Un tel procédé requiert toutefois expérience et habileté, et il manque de fiabilité.

On a proposé, dans le document DE-U-8 631 555, une structure de moulinet de pêche comportant : un arbre support de bobine monté rotatif dans un boîtier de moulinet et sollicité par un frein arrière, une bobine adaptée de manière amovible à l'extrémité antérieure de l'arbre, des moyens pour solidariser en rotation la bobine sur son arbre, un tambour de récupération de fil. Dans ce document, l'arbre comprend, en position intermédiaire, une première gorge annulaire (9) et, au voisinage de son extrémité antérieure, une seconde gorge annulaire (8), les deux gorges étant écartées l'une de l'autre selon un décalage axial; un élément élastique (14), solidaire de la bobine, vient s'engager dans l'une ou l'autre des gorges, pour maintenir la bobine sur l'arbre selon une première position axiale lorsque l'élément élastique (14) est engagé dans la première gorge (9), et pour maintenir la bobine sur l'arbre selon une seconde position axiale lorsque l'élément élastique (14) est engagé dans la seconde gorge (8) ; une clavette (10) solidaire de l'arbre s'engage dans une rainure radiale (11) de la bobine pour solidariser la bobine en rotation sur l'arbre lorsque celle-ci est en première position axiale ; dans la seconde position axiale, la clavette (10) est dégagée hors de la rainure (11), et autorise la libre rotation de la bobine par rapport à l'arbre. Les deux gorges (9, 8) présentent des faces latérales abruptes, et maintiennent la bobine dans l'une ou l'autre des positions axiales sur l'arbre. Le passage d'une position axiale à l'autre nécessite l'actionnement d'un bouton (16) qui écarte l'élément élastique (14) hors des gorges (9, 8).

Ainsi, le dispositif décrit dans ce document permet de libérer la bobine en rotation sur son arbre lorsque celle-ci est en seconde position axiale, c'est-à-dire lorsque la bobine est plus éloignée du tambour, et lorsque l'élément élastique (14) est engagé dans la seconde gorge annulaire (8) plus proche de l'extrémité de l'arbre. Le passage de la seconde position axiale vers la première position axiale, pour solidariser à nouveau la bobine en rotation sur l'arbre, nécessite l'actionnement du bouton (16).

Un tel dispositif n'est pas adapté à l'utilisation du moulinet pour la pêche au poser, car il ne permet pas de régler à nouveau, de manière commode et rapide, le couple de freinage avant le ferrage.

Le problème proposé par la présente invention est de permettre non seulement le désaccouplement en rotation de la bobine sur son arbre, comme dans le document DE-U-8 631 555, mais également de permettre le réaccouplement automatique de la bobine sur l'arbre dès que le pêcheur veut reprendre en main le moulinet.

Ainsi, un objet de l'invention est d'assurer un réaccouplement automatique de la bobine sur son arbre support de bobine, produisant la solidarisation en rotation de la bobine sur son arbre, dès que le pêcheur reprend en main le moulinet pour récupérer le fil en actionnant sa manivelle.

Un autre objet de l'invention est de produire et de régler un couple de freinage auxiliaire de la bobine autour de son axe support de bobine lorsque celle-ci est désaccouplée.

Selon l'invention, ces fonctions sont réalisées avec des moyens particulièrement simples et peu onéreux, n'augmentant pas sensiblement le coût de fabrication des moulinets.

En outre, les moyens utilisés selon l'invention sont facilement adaptables sur tous types de moulinets à frein arrière à bobine démontable, sans avoir a modifier les pièces internes d'entraînement en rotation ou de freinage de l'arbre dans le corps de moulinet.

Pour atteindre ces objets ainsi que d'autres, le moulinet selon l'invention comprend :
- un arbre support de bobine, monté rotatif dans le boîtier de moulinet et sollicité par un frein arrière,
- une bobine adaptée de manière amovible par des moyens de solidarisation axiale réversibles à l'extrémité antérieure de l'arbre, avec des moyens de solidarisation en rotation pour solidariser la bobine en rotation par rapport à l'arbre,
- un tambour de récupération de fil, sollicité en rotation par une manivelle,
- une première et une seconde gorges annulaires ménagées au voisinage de l'extrémité antérieure de l'arbre et écartées l'une de l'autre selon un décalage axial,
- un élément élastique solidaire de la bobine et venant s'engager dans l'une ou l'autre des gorges, pour maintenir la bobine sur l'arbre selon une première position axiale lorsque l'élément élastique est engagé dans la première gorge, et pour maintenir la bobine sur l'arbre selon une seconde position axiale décalée axialement de la première position lorsque l'élément élastique est engagé dans la seconde gorge,
- des moyens de solidarisation en rotation pour assurer la solidarisation de la bobine en rotation sur l'arbre, lorsque la bobine est dans la première position axiale,
- les moyens de solidarisation en rotation étant inopérants et autorisant la rotation de la bobine sur l'arbre lorsque celle-ci est dans la seconde position axiale,
- des moyens de réaccouplement automatiques produisant le déplacement axial automatique de la bobine de sa seconde position axiale jusqu'à sa première position axiale par l'actionnement de la manivelle du moulinet.

Selon un mode de réalisation avantageux, adapté aux moulinets dans lesquels l'arbre support de bobine est soumis à un mouvement de translation alternative dans le boîtier lors de la rotation de la manivelle, l'invention met à profit ce mouvement de translation pour assurer le réaccouplement automatique de la bobine sur son arbre. Pour cela :
- la seconde gorge comporte une rampe en direction de la première gorge, pour autoriser la translation de la bobine en direction de la première gorge sous l'action d'un effort axial sollicitant la bobine à l'encontre de la force de retenue produite par l'élément élastique,
- l'arbre support de bobine est entrainé selon un mouvement de translation alternative axiale dans le boîtier de moulinet par la rotation de la manivelle,
- une butée, fixe en translation axiale par rapport au boîtier de moulinet, autorise le déplacement axial de la bobine selon toute la course axiale de l'arbre lorsque la bobine est en première position axiale ; par contre, la butée s'oppose au déplacement axial de la bobine par rapport au boîtier de moulinet sur une portion de la course axiale de l'arbre, de sorte que, dans ladite portion de course axiale de l'arbre, la bobine est déplacée sur l'arbre jusqu'à sa première position axiale. Ainsi, la rotation de la manivelle, qui produit la translation axiale de l'arbre, produit également le déplacement de la bobine depuis la seconde position axiale sur l'arbre jusqu'à la première position axiale sur l'arbre.

On pourra imaginer que la butée peut limiter la course de la bobine vers l'avant, ou peut limiter la course de la bobine vers l'arrière.

Toutefois, on pourra préférer un mode de réalisation dans lequel la butée limite la course de la bobine vers l'arrière. En effet, ce mode de réalisation présente les avantages suivants :
- pour amener la bobine en seconde position axiale, c'est-à-dire dans la position dans laquelle la bobine est libre en rotation sur son arbre, il suffit de pousser axialement la bobine à la main vers le corps de moulinet en appuyant sur sa face frontale accessible, ce qui est un geste très facile et naturel, plus facile qu'une traction ;
- pour le déplacement de la bobine depuis sa seconde position axiale jusqu'à sa première position axiale, il suffit d'empêcher, sur une portion de course axiale de l'arbre, le déplacement axial de la bobine vers l'arrière, ce qui peut être réalisé plus aisément par un moyen de butée portant sur la face arrière de la bobine.

Ainsi, selon ce mode de réalisation préféré :
- la gorge proche de l'extrémité de l'arbre assure le maintien en première position axiale dans laquelle la bobine est solidaire en rotation de l'arbre, et la seconde gorge est plus éloignée de l'extrémité de l'arbre,

- une portion antérieure du tambour récupérateur de fil forme butée limitant la translation de la bobine vers l'arrière,

- lors du mouvement de recul de l'arbre, la bobine est retenue par la portion antérieure de tambour, l'élément élastique échappe de la seconde gorge et s'insère dans la première gorge pour mettre la bobine en première position axiale sur l'arbre.

Le moulinet peut avantageusement comprendre un organe de freinage auxiliaire, comportant une pièce de frottement venant porter contre une partie solidaire en rotation de l'arbre, la pièce de frottement étant actionnée par un organe de réglage accessible par l'utilisateur pour régler le freinage entre la bobine et l'arbre support.

D'autres objets, caractéristiques et avantages de la présente invention ressortiront de la description suivante de modes de réalisation particuliers, faite en relation avec les figures jointes parmi lesquelles :

- la figure 1 est une vue de côté en coupe longitudinale d'un moulinet selon l'invention, l'arbre support de bobine étant en position avancée, la bobine étant dans sa première position axiale de solidarisation en rotation ;

- la figure 2 représente le moulinet de la figure 1 dans lequel l'arbre est encore en position avancée, et la bobine est dans sa seconde position axiale de débrayage ;

- la figure 3 représente le moulinet de la figure 1 dans une position dans laquelle l'arbre support de bobine est reculé en position intermédiaire, et la bobine est dans sa seconde position axiale de débrayage juste avant son retour dans la première position axiale ;

- la figure 4 illustre de manière schématique le déplacement de la clavette élastique par rapport à l'arbre support de bobine entre la seconde position axiale et la première position axiale de bobine ;

- la figure 5 illustre en vue de face une pièce rapportée constituant le logement de bobine dans lequel vient s'engager la clavette de l'arbre support de bobine pour la solidarisation de la bobine en rotation sur son arbre ;

- la figure 6 est une coupe longitudinale de la pièce de la figure 5 ;

- la figure 7 illustre la constitution d'un organe de freinage auxiliaire selon l'invention pour le freinage de la bobine sur son arbre support ; et

- la figure 8 illustre un autre mode de réalisation de l'organe de freinage auxiliaire selon l'invention.

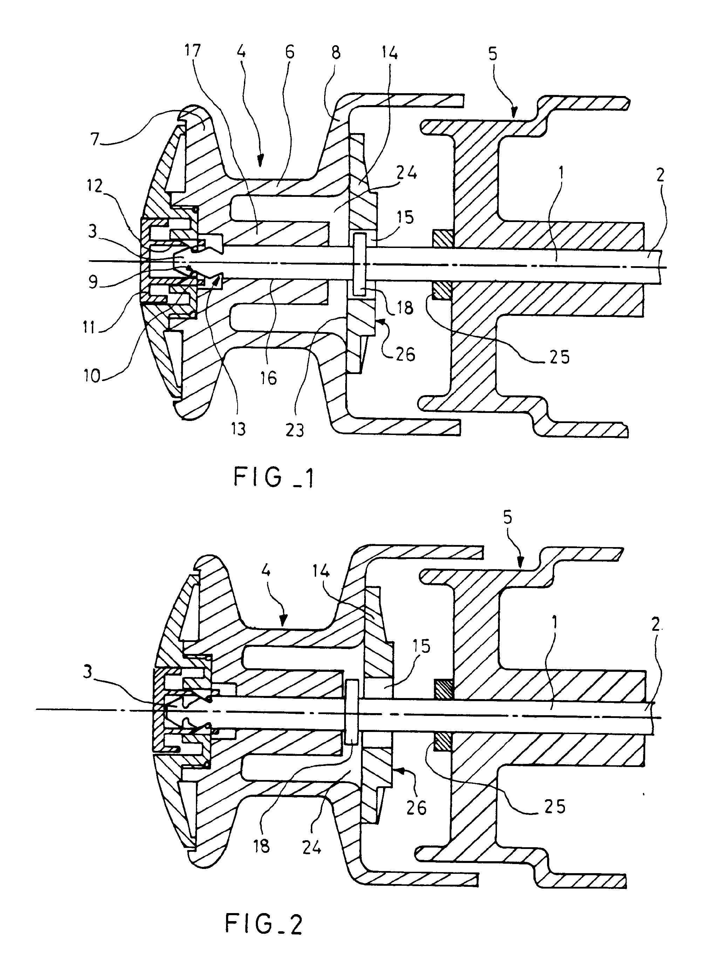

Les figures 1 à 3 représentent la partie antérieure d'un moulinet de pêche selon l'invention, comprenant un arbre 1 support de bobine, monté rotatif dans un boîtier non représenté sur les figures, et sollicité par un frein arrière également non représenté. L'arbre 1 tourillonne dans des paliers du boîtier de moulinet selon son extrémité postérieure prolongeant la partie postérieure 2 représentée sur les figures. L'extrémité antérieure 3 de l'arbre support de bobine est libre pour recevoir une bobine 4 amovible. Un tambour 5 de récupération de fil est monté rotatif sur l'arbre 1 selon une position axiale fixe par rapport au boitier de moulinet, et est entraîné en rotation par une manivelle non représentée. Une telle structure de moulinet avec un arbre support 1, une bobine 4 et un tambour 5 est une structure classique connue. Lors de l'étape de récupération de fil, la bobine 4 se trouve solidaire en translation et en rotation de l'arbre support 1. L'arbre 1 et la bobine 4 sont animés d'un mouvement de translation axiale alternatif, tandis que le tambour 5 est animé d'un mouvement de rotation axiale. Par ces deux mouvements combinés, le fil de pêche récupéré est enroulé et rangé sur le moyeu cylindrique central 6 de bobine reliant les deux flasques 7 et 8.

De manière connue, la bobine 4 est de type amovible. Comme dans le dispositif connu du brevet US-A-2 865 662, l'extrémité antérieure 3 de l'arbre support de bobine 1 comporte une première gorge périphérique 9 dans laquelle s'engage un élément élastique ou clavette élastique 10, telle que représentée sur les figures, solidaire de la bobine 4. Un poussoir axial 11 est mobile en translation axiale par rapport au corps de bobine 4, et comporte une extrémité postérieure 12 conique susceptible de s'engager entre les branches de la clavette élastique 10 lorsque le poussoir 11 est repoussé vers l'arrière. En pressant le poussoir 11 vers l'arrière, son extrémité postérieure 12 s'engage entre les branches de la clavette élastique 10, écartant lesdites branches de la clavette et provoquant leur désengagement de la première gorge 9 de l'arbre 1. Dans cette position, la bobine 4 peut alors être retirée librement de l'arbre 1 par translation axiale vers l'avant.

Pour l'engagement de la bobine 4 sur son arbre, il suffit de presser la bobine 4 sur l'arbre 1 vers l'arrière. Les branches de la clavette élastique 10 viennent porter sur l'extrémité antérieure 3 de l'arbre 1 qui présente avantageusement une forme conique comme le montrent les figures, de sorte que la pression de la bobine 4 vers l'arrière écarte progressivement les branches de la clavette élastique 10 qui pénètrent ensuite dans la première gorge 9. Les parois antérieures de la première gorge 9 présentent avantageusement une inclinaison sensiblement perpendiculaire à l'axe longitudinal de l'arbre 1, de sorte qu'une traction de la bobine 4 vers l'avant ne permet pas le désengagement de ladite bobine 4 hors de son arbre 1.

Lorsque les branches de la clavette élastique 10 sont engagées dans la première gorge 9 de l'arbre 1, on considère que la bobine 4 occupe sa première position axiale. Selon l'invention, l'extrémité antérieure 3 de l'arbre 1 comporte une seconde gorge annulaire 13, décalée axialement vers l'arrière par rapport à la première gorge 9. Lorsque les branches de la clavette élastique 10 s'engagent dans la deuxième gorge 13, on considère que la bobine 4 occupe une seconde position axiale sur l'arbre 1, comme le représente la figure 2.

La bobine 4 comporte en outre une paroi postérieure 14, rapportée et solidarisée sur le flasque postérieur 8, et comportant un passage central 15 traversé par l'arbre 1 support de bobine. La solidarisation radiale de la bobine 4 sur l'arbre 1 est assurée par un alésage 16 ménagé dans une portion centrale 17 du corps de bobine, de sorte que l'alésage 16 s'adapte à faible jeu sur l'arbre 1.

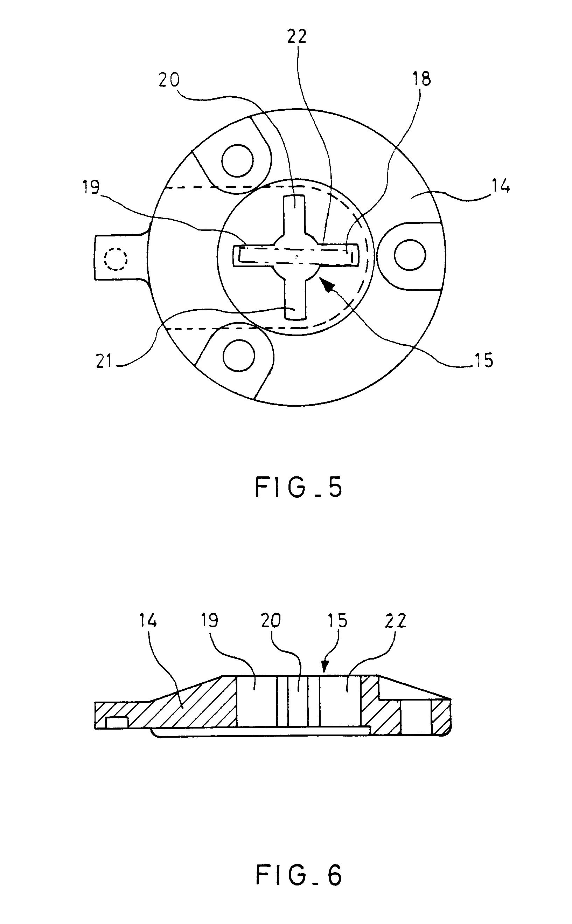

L'arbre 1 et la bobine 4 sont en outre munis de moyens d'engagement réciproque pour assurer la solidarisation en rotation de la bobine 4 sur l'arbre 1. Dans le mode de réalisation représenté sur les figures, le moyen de solidarisation en rotation comprend une clavette 18 ou tige radiale insérée dans un trou diamétral traversant de l'arbre 1, la tige dépassant de part et d'autre du trou diamétral, ces parties dépassantes s'engageant dans des logements radiaux respectifs du passage central 15 de paroi postérieure 14 de bobine. Les logements radiaux du passage central 15 sont mieux représentés sur les figures 5 et 6. Dans le mode de réalisation représenté, la paroi postérieure 14 comprend 4 logements radiaux disposés en croix, à savoir les logements 22 et 19 diamétralement opposés l'un à l'autre, et les logements 20 et 21 également opposés l'un à l'autre, dimensionnés chacun pour recevoir à faible jeu une partie dépassante de la clavette 18. La partie centrale du passage 15 permet le libre coulissement de l'arbre 1. Les logements radiaux 19 à 22 permettent également le libre coulissement axial de la clavette 18, mais interdisent la rotation relative de la clavette 18 par rapport à la paroi postérieure 14 lorsque ladite clavette 18 est engagée dans le passage 15.

La face antérieure 23 de la paroi postérieure 14 est séparée de la portion centrale 17 de bobine 4 par un espace 24 définissant un logement dans lequel la clavette 18 peut librement tourillonner dans la bobine 4. De cette manière, lorsque la clavette 18 est positionnée dans l'espace 24, la bobine 4 est libre en rotation sur l'arbre support de bobine 1.

Les dipositions relatives de la clavette 18, du passage 15, de l'espace 24, des deux gorges 9 et 13 et de la clavette élastique 10 sont choisies de telle manière que :

    - dans la première position axiale de bobine 4, lorsque la clavette élastique 10 est engagée dans la première gorge 9 de l'arbre 1 tel que le représente la figure 1, la clavette 18 de l'arbre 1 est positionnée dans le passage 15, pour solidariser la bobine 4 en rotation sur l'arbre 1 ;

    - lorsque la clavette élastique 10 est engagée dans la seconde gorge 13 de l'arbre 1 comme le représente la figure 2, la bobine 4 étant alors en seconde position axiale, la clavette 18 se trouve dans la zone de l'espace 24, pour désolidariser la bobine 4 en rotation sur son arbre support de bobine 1.

Pour la pêche au posé, l'utilisateur peut donc choisir l'une des deux positions de la bobine 4 sur son arbre 1 : pour attendre que le poisson morde, l'utilisateur enfonce la bobine 4 sur son arbre 1 pour la placer dans la seconde position axiale dans laquelle elle est désolidarisée en rotation de son arbre 1 ; pour ferrer lorsque le poisson a mordu, l'utilisateur peut tirer la bobine 4 pour la ramener en première position axiale dans laquelle la bobine 4 est solidaire en rotation de son arbre et est donc soumise au couple de freinage du frein arrière.

Pour permettre le passage automatique de la seconde position axiale à la première position axiale, pour le réaccouplement de la bobine 4 sur son arbre 1, la face postérieure de la première gorge 9 est conique et forme une rampe inclinée vers l'avant comme le représentent les figures de même, la face antérieure de la seconde gorge 13 est conique et forme une rampe inclinée vers l'arrière. Une simple pression axiale de la bobine 4 provoque ainsi l'écartement des branches de la clavette élastique 10 pour le passage d'une gorge à l'autre. L'élasticité de la clavette 10 assure toutefois un maintien suffisant de la bobine 4 dans l'une et l'autre des gorges, pour lui conserver la position choisie par l'utilisateur en l'absence d'une sollicitation axiale volontaire. La clavette élastique 10 assure ainsi une double fonction : elle assure d'une part la solidarisation axiale réversible de la bobine 4 sur son arbre 1, par actionnement du poussoir 11 ; elle assure d'autre part le maintien de la bobine 4 selon l'une et l'autre des positions axiales.

Selon une variante non représentée sur les figures, on peut inverser la première et la seconde positions axiales de bobine 4 : lorsque la clavette élastique 10 est engagée dans la première gorge 9 la plus proche de l'extrémité antérieure 3 de l'arbre 1, la clavette 18 sort du passage 15 et est alors disposée en arrière de la paroi postérieure 14 ; lorsque la clavette élastique 10 est engagée dans la seconde gorge 13 la plus éloignée de l'extrémité 3 de l'arbre 1, la clavette 18 s'insère alors dans le passage 15 et bloque la bobine 4 en rotation sur l'arbre 1.

On pourra toutefois préférer le mode de réalisation précédemment décrit, notamment pour le fait qu'il simplifie sensiblement les moyens assurant le retour automatique de la bobine 4 en première position axiale.

Pour assurer le retour automatique de la bobine 4 en première position axiale, on prévoit un moyen de réaccouplement automatique, actionné par la manivelle de moulinet lors de sa rotation sous l'impulsion de l'utilisateur, ledit moyen de réaccouplement repoussant la bobine 4 en direction de la première gorge 9.

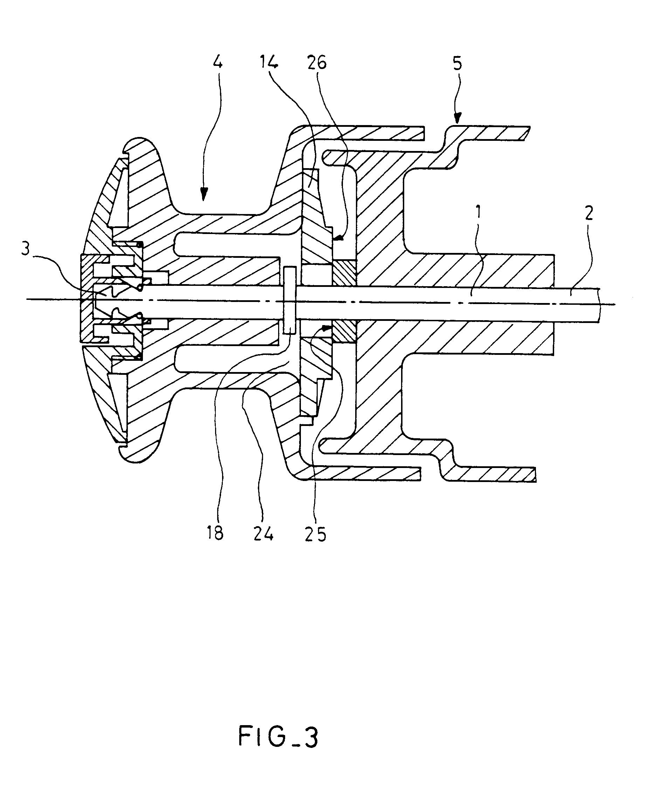

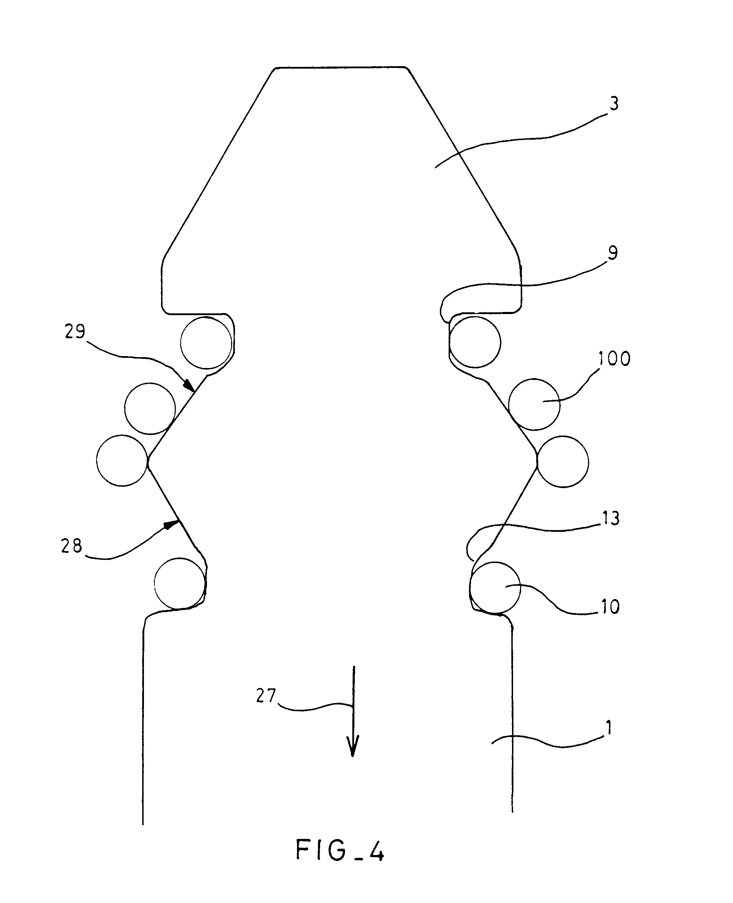

Le mode de réalisation représenté sur les figures assure la poussée de la bobine 4 par des moyens particulièrement simples, profitant du mouvement de translation alternative axiale de l'arbre 1 dans le boîtier de moulinet. Pour cela, on considère que le tambour 5 de récupération de fil est un élément fixe en translation axiale par rapport au boîtier de moulinet, et l'on prévoit une portion antérieure 25 du tambour 5 formant butée pour limiter le déplacement axial de la bobine 4 vers l'arrière. En positionnant de manière appropriée les gorges 9 et 13 de l'arbre 1, la portion antérieure 25 du tambour 5 et la partie postérieure correspondante 26 de bobine 4, on s'arrange pour que, lors du mouvement de recul de l'arbre 1 dans le boîtier de moulinet, lorsque la bobine 4 est en seconde position axiale, la bobine 4 vienne en appui sur la partie antérieure 25 du tambour 5 pendant une partie de la course axiale de l'arbre 1 et coulisse alors sur l'arbre support de bobine 1 selon une distance suffisante pour que les branches de la clavette élastique 10, initialement logées dans la seconde gorge 13 et progressivement écartées par l'action de la paroi antérieure de seconde gorge 13, atteignent la première gorge 9. Ce mouvement est schématisé plus en détail sur la figure 4 : la bobine étant initialement en seconde position axiale, la clavette 10 est engagée dans la seconde gorge 13. Lors du recul de l'arbre 1 dans le sens représenté par la flèche 27, la bobine 4 se rapproche progressivement du tambour 5 et atteint la position représentée sur la figure 3 dans laquelle sa partie postérieure 26 vient au contact de la partie antérieure 25 du tambour 5. L'arbre 1 poursuit alors son recul en coulissant dans l'alésage 16 de bobine. Lors de ce recul, la clavette 10 s'écarte en appui sur la paroi antérieure 28 de la seconde gorge 13, et atteint le début de la paroi postérieure 29 de la première gorge 9. Il faut que le mouvement de recul de l'arbre 1 permette à la clavette élastique 10 d'atteindre franchement la paroi postérieure 29 de la première gorge 9, par exemple dans la position 100 représentée sur la figure 4. A partir de cette position, l'élasticité de la clavette élastique 10 en appui sur la face postérieure conique 29 assure par elle-même le coulissement de la bobine 4 jusque dans sa première position axiale dans laquelle la clavette 10 s'insère dans la première gorge 9, de sorte que la bobine 4 échappe à la butée antérieure 25 du tambour 5.

Dans le mode de réalisation représenté, la portion antérieure 25 du tambour 5 est constituée par un écrou solidaire du tambour 5 et dont la position axiale peut être réglée par rapport au tambour. Cette possibilité de réglage permet d'éviter les défauts dûs à la dispersion relativement importante de dimensionnement des pièces, introduisant une dispersion importante de la distance entre les gorges 9 et 13 et la portion 25. On règle ainsi cette distance de manière que, lors du passage de la seconde position axiale vers la première position, la clavette élastique 10 atteigne toujours la position 100 représentée sur la figure 4.

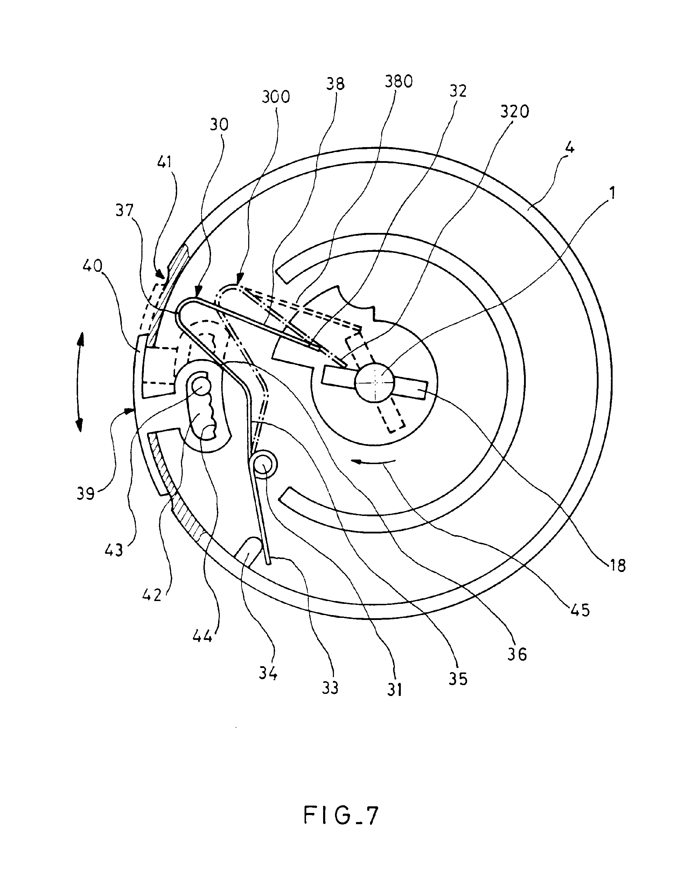

La figure 7 illustre un dispositif de freinage auxiliaire, permettant de régler la force de freinage entre la bobine 4 et l'arbre support de bobine 1 lorsque la bobine 4 est en seconde position axiale dans laquelle elle peut tourner autour de l'arbre 1. Ce dispositif comporte une pièce de frottement, solidaire de la bobine, venant porter contre une partie de l'arbre 1, la pièce de frottement étant actionnée par un organe de réglage accessible par l'utilisateur pour régler ladite force de frottement.

Dans le mode de réalisation représenté, la pièce de frottement est une tige élastique 30, articulée sur un pivot axial 31 excentré de la bobine 4, et comportant une extrémité libre 32 disposée au voisinage de l'arbre 1. Une partie intermédiaire de la tige 30 s'enroule autour du pivot axial 31 et se poursuit au-delà du pivot par une portion d'appui 33 dont l'extrémité est en appui sur un bossage 34 du corps de bobine.

L'extrémité 32 de la tige élastique 30 pénètre dans l'espace 24 de la figure 3, espace prévu pour loger la partie dépassante de clavette 18 et autoriser la rotation de la bobine 4.

A partir du pivot 31, qui est disposé en une zone intermédiaire du corps de bobine comme le représente la figure, la tige 30 se poursuit, à l'opposé de sa portion d'appui 33, par une portion transversale 35 se raccordant par une partie incurvée à une portion 36 qui se développe obliquement en direction de la paroi périphérique de bobine, se raccordant elle-même par un coude 37 à une partie radiale 38 se développant en direction de l'axe 1 jusqu'à son extrémité 32.

Un coulisseau 39 permet de régler la position de la tige élastique 30. Le coulisseau 39 comporte une portion extérieure 40 accessible de l'extérieur de la bobine et portant contre la face externe 41 de la bobine 4. Le coulisseau comprend une partie interne, raccordée à la partie externe 40 par une zone de liaison radiale traversant une lumière de la paroi périphérique extérieure de bobine 4. La partie interne de coulisseau comprend une lumière 42 en arc coaxiale traversée par un pivot axial 43 solidaire de la bobine 4. La lumière 42 comprend une paroi d'appui 44 en arc, munie de crans d'arrêt. La partie interne du coulisseau 39 vient en appui contre la face externe de la portion oblique 36 de tige élastique 30.

Ainsi, le coulisseau 39 est monté à coulissement dans des guides annulaires coaxiaux de la bobine 4, les guides annulaires étant formés par la face extérieure 41 de bobine, par la lumière traversée par la portion de liaison radiale du coulisseau, et par le pivot 43 contre lequel vient porter la paroi 44. La tige 30 élastique repousse élastiquement le coulisseau 39 vers l'extérieur à l'écart de l'axe 1 pour faire porter sa paroi d'appui 44 contre le pivot axial 43 de bobine. Le coulisseau 39 peut ainsi coulisser dans ses guides entre une première position représentée en traits pleins sur la figure et une seconde position représentée en pointillés, le coulisseau étant maintenu dans chacune des positions extrêmes ou dans les positions intermédiaires par le fait que le pivot 43 vient s'engager dans les crans d'arrêt de la paroi d'apppui 44. La tige élastique 30 est conformée de manière que sa portion oblique 36 vienne en permanence en appui contre la partie interne du coulisseau 39, quelle que soit la position du coulisseau.

Lorsque le coulisseau 39 est dans sa première position représentée en traits pleins, la tige élastique 30 est relativement à l'écart de l'axe 1, dans sa position représentée en traits pleins sur la figure 7. Dans cette position, l'extrémité 32 de la tige élastique 30 est à l'écart de l'axe 1 et n'est pas atteinte par les parties dépassantes de la clavette 18. Par contre, lorsque le coulisseau 39 est dans sa seconde position représentée en pointillés, la tige 30 est alors repoussée en direction de l'axe 1, dans une position représentée en traits mixtes sous la référence 300, et son extrémité 32 prend alors une position 320 proche de l'axe 1. Dans cette position, l'extrémité 32 de tige vient en appui sur les parties dépassantes de la clavette 18 lors de la rotation de la bobine 4 par rapport à l'arbre 1.

A chaque passage d'une partie dépassante de clavette 18, celle-ci repousse la tige élastique 30 en position 380 représentée en pointillés, et produit alors une impulsion de freinage entre la bobine 4 et l'arbre 1. Par réglage du coulisseau 39, on peut faire varier l'impulsion de freinage. Par exemple, pour une rotation relative de la clavette 18 par rapport à la bobine 4 telle que représentée sur la figure 7 par la flèche 45, la position 300 en traits mixtes de la tige 30 produira un couple de freinage maximum, tandis que la position initiale représentée en traits pleins produira un couple de freinage minimum, voire nul. Le dispositif assure en outre un effet de bruiteur, par le fait que les impacts de la clavette 18 sur l'extrémité 32 de tige 30 sont audibles et permettent au pêcheur d'être averti du fait que le fil commence à se dévider par rotation de la bobine 4, indiquant qu'un poisson a mordu.

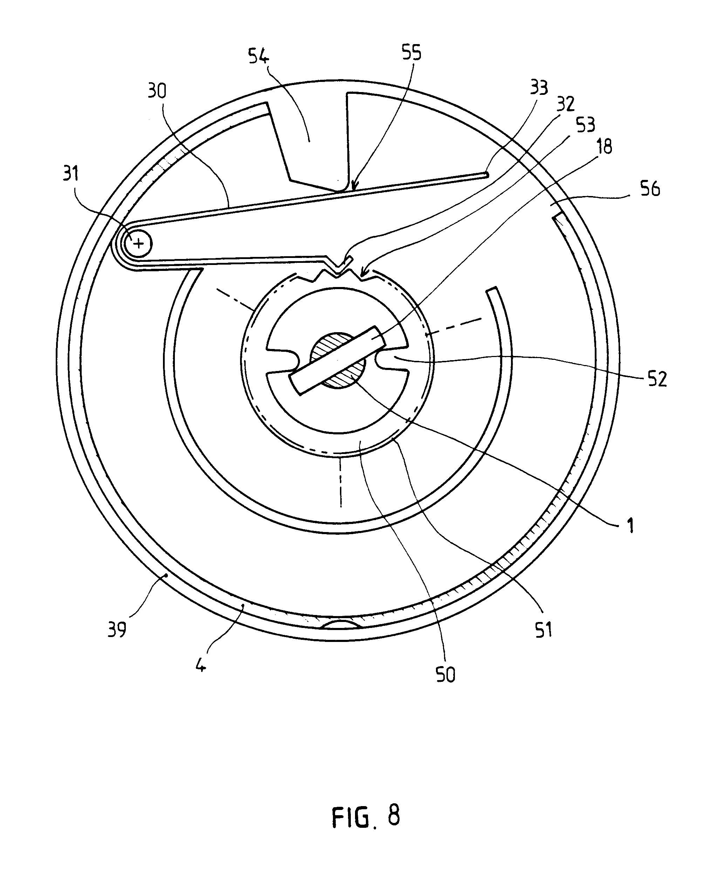

La figure 8 illustre un autre mode de réalisation du dispositif de freinage auxiliaire selon l'invention, permettant de régler la force de freinage entre la bobine 4 et l'arbre support de bobine 1 lorsque la bobine 4 est en seconde position axiale dans laquelle elle peut tourner autour de l'arbre 1. Dans ce mode de réalisation, on prévoit également une pièce de frottement sous forme d'une tige élastique 30, actionnée par un organe de réglage 39 accessible par l'utilisateur. La pièce de frottement 30 est articulée, dans sa zone centrale, autour d'un pivot axial 31 excentré de la bobine. Une première extrémité 32 de la tige 30 élastique vient en appui radial sur la surface périphérique 53 d'une bague folle 50 montée rotative dans un alésage 51 axial de la bobine 4. La bague folle 50 comporte des ergots intérieurs tels que l'ergot 52, venant buter contre la clavette 18 de l'arbre 1, pour solidariser en rotation la bague 50 et l'arbre 1 lorsque la bobine 4 est dans sa seconde position axiale. La tige élastique 30 comprend une zone d'appui 55, voisine de sa seconde extrémité 33, ladite zone d'appui 55 étant en appui élastique contre un organe de réglage 39. L'organe de réglage 39 est une bague circulaire souple adaptée sur la périphérie de bobine 4 et munie d'une patte radiale centripète 54 traversant une lumière annulaire 56 du corps de bobine et portant radialement contre ladite zone d'appui 55 de tige élastique 30. La zone d'appui 55 de tige élastique 30 forme une corde disposée dans une zone intérieure creuse du corps de bobine 4, comme le représente la figure 8. Ainsi, par déplacement circulaire de la bague 39, on déplace la patte 54 : dans la position médiane représentée sur la figure 8, la patte 54 est en appui sur le milieu de la corde formée par la zone d'appui 55 de tige élastique 30, produisant une force d'appui minimale de l'extrémité 32 de tige sur la bague folle 50 ; par contre, en déplaçant la patte 54 vers la droite, celle-ci repousse la zone d'appui 55, et augmente la force d'appui exercée par l'extrémité opposée 32 de la tige élastique 30 sur la bague folle 50, augmentant la force de freinage auxiliaire.

Avantageusement, on prévoit, sur au moins une portion de surface périphérique 53 de la bague folle 50, des parties dentelées, produisant un bruitage lors du freinage par l'organe de freinage auxiliaire.

Ce mode de réalisation de la figure 8 permet une plus grande régularité du couple de freinage, et un bruitage plus agréable. En outre, l'organe de réglage 39 sous forme de bague circulaire est plus facile à manoeuvrer pour régler la tension de la tige élastique 30.

La présente invention n'est pas limitée aux modes de réalisation qui ont été explicitement décrits, mais elle en inclut les diverses variantes et généralisations contenues dans le domaine des revendications ci-après.

**Revendications**

1. Moulinet de pêche à frein arrière, comportant :
   - un arbre (1) support de bobine monté rotatif dans un boîtier de moulinet et sollicité par un frein arrière,
   - une bobine (4) adaptée de manière amovible à l'extrémité antérieure (3) de l'arbre (1), avec des moyens (15, 18) pour solidariser la bobine (4) en rotation par rapport à l'arbre (1),
   - un tambour de récupération de fil (5), sollicité en rotation par une manivelle,
   - une première (9) et une seconde (13) gorges annulaires ménagées au voisinage de l'extrémité antérieure (3) de l'arbre (1) et écartées l'une de l'autre selon un décalage axial,
   - un élément élastique (10) solidaire de la bobine et venant s'engager dans l'une ou l'autre des gorges (9, 13), pour maintenir la bobine (4) sur l'arbre (1) selon une première position axiale lorsque l'élément élastique (10) est engagé dans la première gorge (9), et pour maintenir la bobine (4) sur l'arbre (1) selon une seconde position axiale décalée axialement de la première position lorsque l'élément élastique (10) est engagé dans la seconde gorge (13),
- des moyens de solidarisation en rotation (15, 18) pour assurer la solidarisation de la bobine en rotation sur l'arbre (1), lorsque la bobine est dans la première position axiale,
- les moyens de solidarisation en rotation étant inopérants et autorisant la rotation de la bobine (4) sur l'arbre (1) lorsque celle-ci est dans la seconde position axiale,
caractérisé en ce qu'il comprend des moyens de réaccouplement automatiques (28, 25,5) produisant le déplacement axial automatique de la bobine (4) de sa seconde position axiale jusqu'à sa première position axiale par l'actionnement de la manivelle du moulinet.

2. Moulinet selon la revendication 1, caractérisé en ce que :
- la seconde gorge (13) comporte une rampe (28) en direction de la première gorge (9), pour autoriser la translation de la bobine en direction de la première gorge sous l'action d'un effort axial sollicitant la bobine à l'encontre de la force de retenue produite par l'élément élastique (10),
- l'arbre support de bobine (1) est entraîné selon un mouvement de translation alternative axiale dans le boîtier de moulinet par la rotation de manivelle,
- une butée (25) fixe en translation axiale par rapport au boîtier de moulinet, autorise le déplacement axial de la bobine selon toute la course axiale de l'arbre lorsque celle-ci est en première position axiale, mais s'oppose au déplacement axial de la bobine par rapport au boîtier de moulinet sur une portion de la course axiale de l'arbre, de sorte que dans ladite portion de course axiale de l'arbre la bobine est déplacée sur l'arbre jusqu'à sa première position axiale.

3. Moulinet selon la revendication 2, caractérisé en ce que :
- la gorge (9) proche de l'extrémité (3) de l'arbre (1) assure le maintien en première position axiale dans laquelle la bobine (4) est solidaire en rotation de l'arbre, et la seconde gorge (13) est plus éloignée de l'extrémité (3) de l'arbre,
- une portion antérieure (25) du tambour récupérateur de fil (5) forme butée limitant la translation de la bobine (4) vers l'arrière,
- lors du mouvement de recul de l'arbre (1), la bobine est retenue par la portion antérieure (25) de tambour (5), l'élément élastique (10) échappe de la seconde gorge (13) et s'insère dans la première gorge (9) pour mettre la bobine en première position axiale sur l'arbre (1).

4. Moulinet selon l'une des revendications 2 ou 3, caractérisé en ce que les moyens pour solidariser en rotation la bobine (4) sur l'arbre (1) comprennent une clavette transversale (18) solidaire de l'arbre (1) et s'engageant dans un passage (15) ménagé dans la bobine (4) dans la première position axiale de bobine, ladite clavette (18) échappant au passage (15) dans la seconde position axiale.

5. Moulinet selon l'une quelconque des revendications 2 à 4, caractérisé en ce que la première gorge (9) comporte une rampe (29) en direction de la seconde gorge (13), de sorte que, lors du mouvement de réaccouplement, la bobine (4) échappe à la butée fixe (25) sous l'action de l'élément élastique (10).

6. Moulinet selon l'une quelconque des revendications 1 à 5, caractérisé en ce que la bobine (4) comprend une paroi postérieure rapportée (14) munie d'un passage (15) et de logements radiaux (19-22) recevant le moyen de solidarisation en rotation (18) de la bobine, la paroi postérieure (14) étant suivie vers l'avant d'un espace (24) de diamètre plus important dans lequel le moyen de solidarisation en rotation (18) de bobine peut librement tourner dans la bobine (4) sans s'opposer à sa rotation.

7. Moulinet selon l'une quelconque des revendications 1 à 6, caractérisé en ce que la bobine (4) comprend en outre un organe de freinage auxiliaire, comportant une pièce de frottement (30) qui vient porter contre une partie (18) solidaire en rotation de l'arbre (1) et qui est actionnée par un organe de réglage (39) accessible par l'utilisateur pour régler la force de frottement.

8. Moulinet selon la revendication 7, caractérisé en ce que la pièce de frottement (30) est une tige élastique articulée autour d'un pivot axial (31) excentré de la bobine et comprenant une extrémité (32) libre venant en appui radial sur une clavette (18) de l'arbre (1), la portion intermédiaire (36) de tige élastique étant reliée à un organe de réglage (39) pour régler la rotation de la tige (30) autour du pivot (31), ladite tige élastique (30) produisant simultanément un effet de freinage et un effet de bruiteur.

9. Moulinet selon la revendication 8, caractérisé en ce que :
- l'organe de réglage est un coulisseau (39), monté à coulissement dans des guides annulaires coaxiaux de la bobine (4),
- le coulisseau (39) comprend une lumière (42) en arc coaxiale traversée par un pivot axial (43) solidaire de la bobine (4),
- la lumière (42) comprend une paroi d'appui (44) munie de crans d'arrêt,
- le coulisseau (39) est repoussé élastiquement à l'écart de l'axe (1) par la partie intermédiaire (36) de la tige élastique (30), sa paroi d'appui (44) venant porter contre le pivot axial (43), de sorte que le coulisseau est retenu et freiné par l'engagement du pivot (43) dans les crans d'arrêt de la paroi d'appui (44).

10. Moulinet selon la revendication 7, caractérisé en ce que la pièce de frottement (30) est une tige élastique dont la zone centrale est articulée autour d'un pivot axial (31) excentré de la bobine, dont une première extrémité (32) vient en apppui radial sur une bague folle (50) montée rotative dans un alésage (51) axial de la bobine, et dont une zone (55) d'appui voisine de sa seconde extrémité (33) est en appui élastique contre un organe de réglage (39) déplaçable pour régler la force d'appui de la tige élastique (30) sur la bague folle, ladite bague folle (50) comportant des ergots intérieurs (52) venant buter contre une clavette (18) de l'arbre (1) pour solidariser en rotation la bague (50) et l'arbre (1) lorsque la bobine est en seconde position axiale.

11. Moulinet selon la revendication 10, caractérisé en ce que :
- la bague folle (50) comporte au moins une portion de surface périphérique (53) dentelée, produisant un bruitage lors du freinage par l'organe de freinage auxiliaire,
- l'organe de réglage (39) est une bague circulaire souple adaptée sur la périphérie de bobine et munie d'une patte radiale centripète (54) traversant une lumière annulaire (56) du corps de bobine et portant radialement contre ladite zone d'appui (55) de tige (30).

12. Moulinet selon l'une quelconque des revendications 1 à 11, caractérisé en ce qu'il comprend une portion antérieure (25) de tambour (5) dont la position axiale est réglable par rapport au tambour (5) pour assurer le rattrapage des dispersions de cotes entre le tambour (5) et l'extrémité antérieure (3) de l'arbre (1).

**Claims**

1. Fishing reel with reverse brake, comprising:
- a spool support shaft (1) mounted rotatably in a reel housing and biased by a reverse brake,
- a spool (4) adapted removably to the front end (3) of the shaft (1), with means (15, 18) for locking the spool (4) in rotation relative to the shaft (1),
- a line retrieving drum (5) set in rotation by a crank,
- first (9) and second (13) annular grooves formed in the vicinity of the front end (3) of the shaft (1) and spaced apart from each other by an axial offset,
- an elastic element (10) integral with the spool and engaging in either of the grooves (9, 13), for maintaining the spool (4) on the shaft (1) in a first axial position when the elastic element (10) is engaged in the first groove (9), and for maintaining the spool (4) on the shaft (1) in a second axial position axially offset from the first position when the elastic element (10) is engaged in the second groove (13),
- means for locking in rotation (15, 18) to ensure locking of the spool in rotation on the shaft (1), when the spool is in the first axial position,
- the means for locking in rotation being inoperative and enabling rotation of the spool (4) on the shaft (1) when it is in the second axial position,
characterised in that it includes automatic recoupling means (28, 25, 5) producing automatic axial displacement of the spool (4) from its second axial position to its first axial position by actuation of the reel crank.

2. Reel according to claim 1, characterised in that:
- the second groove (13) comprises a ramp (28) in the direction of the first groove (9), to enable translation of the spool in the direction of the first groove under the action of an axial force biasing the spool against the retaining force generated by the elastic element (10),
- the spool support shaft (1) is driven in an alternating axial translation movement in the reel housing by crank rotation,
- a stop (25) fixed in axial translation relative to the reel housing, enables axial displacement of the spool along the whole of the axial stroke of the shaft when it is in the first axial position, but resists axial displacement of the spool relative to the reel housing over part of the axial stroke of the shaft, so that in said part of the axial stroke of the shaft the spool is displaced on the shaft as far as its first axial position.

3. Reel according to claim 2, characterised in that:
- the groove (9) close to the end (3) of the shaft (1) ensures holding in the first axial position in which the spool (4) is locked to the shaft in rotation, and the second groove (13) is further away from the end (3) of the shaft,
- a front portion (25) of the line retrieving drum (5) forms a stop limiting rearward translation of the spool (4),
- during the backward movement of the shaft (1), the spool is retained by the front portion (25) of the drum (5), and the elastic element (10) escapes from the second groove (13) and is inserted in the first groove (9) in order to put the spool in the first axial position on the shaft (1).

4. Reel according to either of claims 2 or 3, characterised in that the means for locking the spool (4) in rotation on the shaft (1) include a transverse key (18) integral with the shaft (1) and engaging in a keyway (15) formed in the spool (4) in the first axial position of the spool, said key (18) escaping from the keyway (15) in the second axial position.

5. Reel according to any of claims 2 to 4, characterised in that the first groove (9) comprises a ramp (29) in the direction of the second groove (13), so that, during the recoupling movement, the spool (4) escapes from the fixed stop (25) under the action of the elastic element (10).

6. Reel according to any of claims 1 to 5, characterised in that the spool (4) includes a separate rear wall (14) provided with a keyway (15) and radial recesses (19-22) receiving the means (18) for locking the spool in rotation, the rear wall (14) being followed towards the front by a space (24) of larger diameter in which the means (18) for locking the spool in rotation can turn freely in the spool (4) without resisting rotation thereof.

7. Reel according to any of claims 1 to 6, characterised in that the spool (4) further includes an auxiliary braking member, comprising a friction piece (30) which comes to bear on a portion (18) locked to the shaft (1) in rotation and which is actuated by an adjusting member (39) accessible to the user for adjusting the frictional force.

8. Reel according to claim 7, characterised in that the friction piece (30) is a resilient rod hinged about an eccentric axial pivot (31) of the spool and including a free end (32) bearing radially on a key (18) of the shaft (1), the intermediate portion (36) of the resilient rod being connected to an adjusting member (39) for adjusting rotation of the rod (30) about the pivot (31), said resilient rod (30) simultaneously producing a braking effect and a noise-making effect.

9. Reel according to claim 8, characterised in that:
- the adjusting member is a sliding block (39) mounted for sliding in coaxial annular guides of the spool (4),
- the sliding block (39) includes an opening (42) in a coaxial arc through which extends an axial pivot (43) integral with the spool (4),
- the opening (42) includes a bearing wall (44) provided with stop notches,
- the sliding block (39) is biased elastically away from the axis (1) by the intermediate portion (36) of the resilient rod (30), its bearing wall (44) coming to bear on the axial pivot (43), so that the sliding block is retained and braked by engagement of the pivot (43) in the stop notches of the bearing wall (44).

10. Reel according to claim 7, characterised in that the friction piece (30) is a resilient rod of which the central zone is hinged about an eccentric axial pivot (31) of the spool, of which a first end (32) bears radially on a loose ring (50) mounted rotatably in an axial bore (51) of the spool, and of which a bearing zone (55) close to its second end (33) bears elastically on a displaceable adjusting member (39) for adjusting the bearing force of the resilient rod (30) on the loose ring, said loose ring (50) comprising inner lugs (52) abutting against a key (18) of the shaft (1) for locking the ring (50) and shaft (1) in rotation when the spool is in the second axial position.

11. Reel according to claim 10, characterised in that:
- the loose ring (50) comprises at least one toothed peripheral surface portion (53) producing a noise during braking by the auxiliary braking member,
- the adjusting member (39) is a flexible circular ring adapted to the spool periphery and provided with a centripetal radial tab (54) extending through an annular opening (56) of the spool body and bearing radially on said bearing zone (55) of the rod (30).

12. Reel according to any of claims 1 to 11, characterised in that it includes a front portion (25) of the drum (5) of which the axial position is adjustable relative to the drum (5) to ensure elimination of variations in dimensions between the drum (5) and the front end (3) of the shaft (1).

**Patentansprüche**

1. Angelrolle mit rückwärtiger Bremse, mit:
   - einer Welle (1) zum Halten der Spule, die in einem Gehäuse der Angelrolle drehbar angeordnet ist und durch eine rückwärtige Bremse beansprucht wird,
   - einer Spule (4), die in einer beweglichen Art und Weise an das vordere Ende (3) der Welle (1) mit Mitteln (15, 18) angepaßt ist, welche eine formschlüssige Drehverbindung der Spule (4) in Bezug auf die Welle (1) bewirken,
   - einer Schnuraufnahme-Trommel (5), welche durch eine Kurbel in Drehung versetzt wird,
   - einer ersten (9) und einer zweiten (13) ringförmigen Rille, die in der Nähe des vorderen Endes (3) der Welle (1) ausgebildet und voneinander gemäß einer axialen Verschiebung beabstandet sind,
   - einem elastischen Element (10), das mit der Spule formschlüssig verbunden ist und mit der einen oder der anderen der Rillen (9, 13) in Eingriff kommt, um die Spule (4) auf der Welle (1) gemäß einer ersten axialen Position zu halten, wenn das elastische Element (10) in der ersten Rille (9) im Eingriff ist, und um die Spule (4) auf der Welle (1) in einer axial von der ersten Position axial verschobenen zweiten Position zu halten, wenn das elastische Element (10) in der zweiten Rille (13) im Eingriff ist,
   - Mitteln (15, 18) zur formschlüssigen Drehverbindung, um die formschlüssige Drehverbindung der Spule auf der Welle (1) zu sichern, wenn sich die Spule in der ersten axialen Position befindet,
   - wobei die Mittel zur formschlüssigen Drehverbindung unwirksam sind und die Drehung der Spule (4) auf der Welle (1) ermöglichen, wenn sich diese in der zweiten axialen Position befindet,
   dadurch gekennzeichnet, daß sie Mittel (28, 25, 5) zum automatischen Wiederankoppeln aufweist, welche die automatische axiale Verschiebung der Spule (4) aus ihrer zweiten axialen Position bis in ihre erste axiale Position durch die Betätigung der Kurbel der Angelrolle bewirken.

2. Angelrolle nach Anspruch 1, dadurch gekennzeichnet, daß
   - die zweite Rille (13) eine Rampe (28) in Richtung der ersten Rille (9) aufweist, um die Translation der Spule in Richtung der ersten Rille unter der Wirkung einer axialen Kraft zu ermöglichen, welche die Spule gegen die durch das elastische Element (10) erzeugte Rückhaltekraft kraftschlüssig verbindet,
   - die Welle (1) zum Halten der Spule für eine abwechselnde axiale Translationsbewegung in dem Gehäuse der Angelrolle durch die Drehung der Kurbel angetrieben wird,
   - ein Festanschlag (25) für die axiale Translation in Bezug auf das Gehäuse der Angelrolle die axiale Verschiebung der Spule für den gesamten axialen Weg der Welle ermöglicht, wenn sich diese in der ersten axialen Position befindet, aber der axialen Verschiebung der Spule in Bezug auf das Gehäuse der Angelrolle über einen Teil des axialen Weges der Welle entgegenwirkt, derart, daß in diesem Teil des axialen Weges der Welle die Spule auf der Welle bis in ihre erste axiale Position verschoben wird.

3. Angelrolle nach Anspruch 2, dadurch gekennzeichnet, daß
   - die Rille (9) nahe dem Ende (3) der Welle (1) die Beibehaltung der ersten axialen Position sichert, in welcher die Spule (4) die formschlüssige Drehverbindung mit der Welle aufweist, und die zweite Rille (13) weiter von dem Ende (3) der Welle entfernt ist,
   - ein vorderer Bereich (25) der Schnuraufnahme-Trommel (5) den Anschlag ausbildet, welcher die Translation der Spule (4) nach rückwärts begrenzt,
   - bei dem Beginn der Aufnahmebewegung der Welle (1) die Spule durch den vorderen Bereich (25) der Trommel (5) gehalten wird, das elastische Element (10) aus der zweiten Rille (13) entweicht und sich in die erste Rille (9) einfügt, um die Spule in die erste axiale Position auf der Welle (1) zu bringen.

4. Angelrolle nach einem der Ansprüche 2 oder 3, dadurch gekennzeichnet, daß die Mittel zur formschlüssigen Drehverbindung der Spule (4) auf der Welle (1) einen Querkeil (18) umfassen, der mit der Welle (1) formschlüssig verbunden ist und in einen Durchlaß (15) eingreift, der in der Spule (4) in der ersten axialen Position der Spule vorgesehen ist, wobei dieser Keil (18) in der zweiten axialen Position aus dem Durchlaß (15) entweicht.

5. Angelrolle nach einem der Ansprüche 2 bis 4, dadurch gekennzeichnet, daß die erste Rille (9) eine Rampe (29) in Richtung der zweiten Rille (13) aufweist, derart, daß bei der Bewegung der Wiederankoppelung die Spule (4) unter der Wirkung des elastischen Elements (10) von dem Festanschlag (25) entweicht.

6. Angelrolle nach einem der Ansprüche 1 bis 5, dadurch gekennzeichnet, daß die Spule (4) eine hintere Bezugswand (14) aufweist, welche mit einem Durchlaß (15) und mit radialen Sitzen (19 bis 22) versehen ist, die das Mittel (18) zur formschlüssigen Drehverbindung der Spule aufnehmen, wobei die hintere Wand (14) nach vorne hin von einem Raum (24) mit einem bedeutsameren Durchmesser gefolgt ist, in welchen das Mittel (18) zur formschlüssigen Drehverbindung der Spule in der Spule (4) frei drehen kann, ohne seiner Wirkung entgegen zu wirken.

7. Angelrolle nach einem der Ansprüche 1 bis 6, dadurch gekennzeichnet, daß die Spule (4) außerdem ein Hilfsbremsorgan aufweist, welches ein Reibungsstück (30) umfaßt, das gegen einen mit der Welle (1) formschlüssig verbundenen, drehenden Bereich (18) zur Anlage kommt und das durch ein für den Benutzer zugängliches Regelorgan (39) betätigt wird, um die Reibungskraft zu regeln.

8. Angelrolle nach Anspruch 7, dadurch gekennzeichnet, daß das Reibungsstück (30) eine elastische Stange ist, die um einen zu der Spule exzentrischen Axialzapfen (31) schwenkbar ist und ein freies Ende (32) aufweist, welches radial gegen einen Keil (18) der Welle (1) zur Abstützung kommt, wobei der Mittelteil (36) der elastischen Stange mit einem Regelorgan (39) verbunden ist, um die Drehung der Stange (30) um den Zapfen (31) zu regeln, wobei die elastische Stange (30) gleichzeitig eine Bremswirkung und eine Geräuschwirkung erzeugt.

9. Angelrolle nach Anspruch 8, dadurch gekennzeichnet, daß
   - das Regelorgan ein Gleitstück (39) ist, das für eine Kulissenführung in ringförmigen, mit der Spule (4) koaxialen Führungen angeordnet ist,
   - das Gleitstück (39) eine koaxiale bogenförmige Öffnung (42) aufweist, die von einem mit der Spule (4) formschlüssig verbundenen Axialzapfen (43) durchquert ist,
   - die Öffnung (42) eine Stützwand (44) aufweist, die mit Rasten versehen ist,
   - das Gleitstück (39) durch den Mittelteil (36) der elastischen Stange (30) mit Abstand von der Achse (1) elastisch zurückgestoßen wird, wobei seine Stützwand (44) gegen den Axialzapfen (43) zum Anschlag kommt, derart, daß das Gleitstück zurückgehalten und durch den Eingriff des Zapfens (43) in die Rasten der Stützwand (44) gebremst wird.

10. Angelrolle nach Anspruch 7, dadurch gekennzeichnet, daß das Reibungsstück (30) eine elastische Stange ist, deren zentraler Bereich um einen zu der Spule exzentrischen Axialzapfen (31) schwenkbar ist, von welcher ein erstes Ende (32) zum radialen Anschlag an einen beweglichen Ring (50) kommt, der in einer Axialbohrung (51) der Spule drehbar angeordnet ist, und von welcher ein Stützbereich (55) in der Nähe ihres zweiten Endes (33) elastisch gegen ein Regelorgan (39) abgestützt ist, das verschiebbar ist, um die Abstützkraft der elastischen Stange (30) an dem beweglichen Ring zu regeln, wobei der bewegliche Ring (50) innere Vorsprünge (52) aufweist, die gegen einen Keil (18) der Welle (1) zum Anschlag kommen, um den Ring (50) und die Welle (1) für eine Drehung formschlüssig zu verbinden, wenn die Spule in der zweiten axialen Position ist.

11. Angelrolle nach Anspruch 10, dadurch gekennzeichnet, daß
    - der bewegliche Ring (50) wenigstens einen gezahnten Umfangsoberflächenteil (53) aufweist, der bei der Bremsung durch das Hilfsbremsorgan ein Geräusch erzeugt,
    - das Regelorgan (39) ein beweglicher kreisförmiger Ring ist, der an den Umfang der Spule angepaßt und mit einer zentripetalen Radiallasche (54) versehen ist, welche eine ringförmige Öffnung (56) des Spulenkörpers durchquert und radial gegen den Stützbereich (55) der Stange (30) anliegt.

12. Angelrolle nach einem der Ansprüche 1 bis 11, dadurch gekennzeichnet, daß sie einen vorderen Bereich (25) der Trommel (5) aufweist, dessen axiale Position in Bezug auf die Trommel (5) regelbar ist, um den Ausgleich von Maßabweichungen zwischen der Trommel (5) und dem vorderen Ende (3) der Welle (1) zu sichern.

FIG _1

FIG_2

FIG_3

FIG_4

FIG_5

FIG_6

FIG_7

EP 0 412 918 B1

FIG. 8

18